# EUROPEAN PATENT SPECIFICATION

(11) **EP 1 974 955 B1**
(45) Date of publication and mention of the grant of the patent: **29.06.2016**
(21) Application number: 07706899.7
(22) Date of filing: 17.01.2007
(51) Int. Cl.: B60C 11/04, B60C 11/12

(54) **PNEUMATIC TIRE**
LUFTREIFEN
PNEUMATIQUE

(30) Priority: 17.01.2006 JP 2006008705
(43) Date of publication of application: 01.10.2008
(73) Proprietor: Bridgestone Corporation, Tokyo 104-8340 (JP)
(72) Inventor: HONBOU, Youichi, 3-chome Kodaira-shi Tokyo 187-8531 (JP)
(74) Representative: Oxley, Robin John George
(86) International application number: PCT/JP2007/050584
(87) International publication number: WO 2007/083657

(56) References cited:
- JP-A- 11 078 433
- JP-A- 2000 158 916
- JP-A- 2001 055 018
- JP-A- 2001 055 019
- JP-A- 2003 011 619
- JP-A- 2003 159 910
- JP-A- 2003 159 911
- JP-U- 61 159 203

## Description

### Technical Field

The present invention relates to a pneumatic tire achieving a good balance between wet performance and uneven wear resistance.

### Background Art

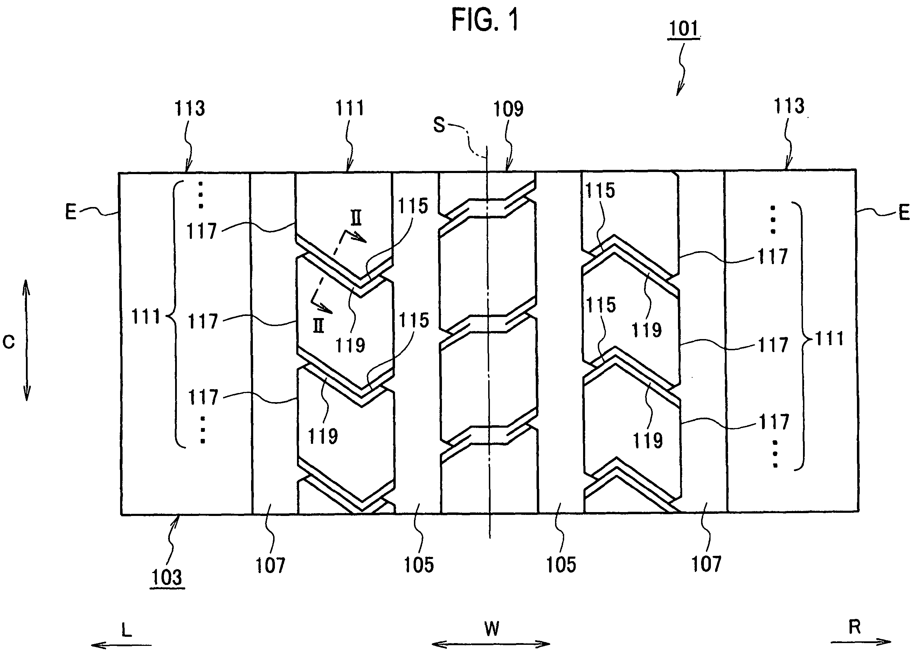

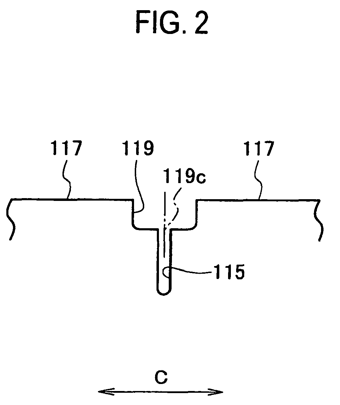

With reference to Figs. 1 and 2, a conventional technique will be described.

Here, Fig. 1 is a planar development view of a part of a tread in a pneumatic tire according to a conventional embodiment. Fig. 2 is a view along the line II-II in Fig. 1. Note that, in the figure, "L" indicates a left direction and "R" indicates a right direction.

As shown in Fig. 1, in a center portion of a tread 103 in a pneumatic tire 101, a pair of center circumferential main grooves 105 extending in a tire circumferential direction C are provided so as to sandwich a tire equator line S therebetween. Moreover, in shoulder portions of the tread 103, a pair of shoulder circumferential main grooves 107 extending in the tire circumferential direction C are provided so as to sandwich the pair of center circumferential main grooves 105 therebetween.

A center rib 109 extending in the tire circumferential direction C is defined by the pair of center circumferential main grooves 105. Moreover, second ribs 111 extending in the tire circumferential direction C are defined each by the center circumferential main groove 105 and the shoulder circumferential main groove 107 adjacent to each other. Furthermore, shoulder ribs 113 extending in the tire circumferential direction C are defined by the shoulder circumferential main grooves 107 and tread edges E.

Moreover, in the pair of second ribs 111, a plurality of sipes 115 are formed in a traversing manner so as to be spaced apart in the tire circumferential direction C. By the plurality of sipes, the pair of second ribs 111 are divided into a plurality of blocks 117. Moreover, in the pair of second ribs 111, a plurality of runner grooves 119 communicated with the sipes 115 are formed in a traversing manner so as to be spaced apart in the circumferential direction. As shown in Fig. 2, a center 119c of each of the runner grooves 119 is positioned on the corresponding sipe 115.

Note that a conventional technique related to the present invention is described in Patent Document 1.
Patent Document 1: Japanese Patent Application Laid-Open NO. 2000-168317
Attention is also drawn to the disclosures of JP2003-011,619, which shows a tire according to the preamble of claim 1. Attention is also drawn to the disclosure of JP2000-168,317.

### Disclosure of Invention

In the above example, the plurality of sipes 115 and the plurality of runner grooves 119 are formed so as to cut across the second ribs 111. Thus, an edge effect (an effect of cutting water films) and drainage can be enhanced. However, as described above, each of the pair of second ribs 111 is divided into the plurality of blocks 117. Thus, due to shear deformation in kicking out, uneven wear such as heel-and-toe (hereinafter abbreviated as H&T) wear is likely to occur. Therefore, in the conventional and general pneumatic tire 101, it is very difficult to improve uneven wear resistance while improving wet performance.

An object of the present invention is to solve the foregoing problems and to provide a pneumatic tire achieving a good balance between wet performance and uneven wear resistance.

As an aspect of the present invention, there is provided a pneumatic tire as claimed in claim 1.

According to the aspect of the present invention, the plurality of sipes are formed in at least two or more of the ribs so as to cut across the ribs. Moreover, in each of the blocks the groove communicated with the sipe is formed so as to cut across the rib. Therefore, an edge effect (an effect of cutting water films) and drainage can be enhanced.

All the intersection angle portions on both sides in the tire circumferential direction in each of the blocks are set to have the obtuse angles. Therefore even if the groove is formed on one side in the tire circumferential direction in each of the blocks, circumferential rigidity on one side in the tire circumferential direction (rigidity in the tire circumferential direction) in each of the blocks can be sufficiently maintained. Moreover, the groove is formed only on one side in the tire circumferential direction in each of the blocks. In other words, the groove is not formed on the other side in the tire circumferential direction in each of the blocks. Thus, reduction in the circumferential rigidity on the other side in the tire circumferential direction in each of the blocks can be suppressed. Accordingly, the circumferential rigidity of the block is sufficiently maintained so that uneven wear such as H&T wear can be made less likely to occur.

In addition to the above configuration, the intersection angles with respect to rib edges may be set to 110° to 125°.

Here, the reason why the angles of the intersection angle portions with respect to the rib edges are set to not less than 110° is because, if the angles of the intersection angle portions with respect to the rib edges are less than 110°, edge components in the tire circumferential direction cannot be
sufficiently secured. Moreover, the reason why the angles of the intersection angle portions with respect to the rib edges are set to not more than 125° is because, if the angles of the intersection angle portions with respect to the rib edges exceed 125°, reduction in circumferential rigidity on the other side of the block in the tire circumferential direction cannot be sufficiently suppressed.

In addition to the above configuration, each of the sipes may have an odd number of bent portions in the middle of crossing the rib.

Furthermore, in addition to the above configuration, a depth of the groove may be set to 2 mm to 4 mm and a width of the runner groove may be set to 2 mm to 5 mm.

Here, the reason why the depth and width of the groove are set to not less than 2 mm is because, if the depth and width of the groove are less than 2 mm, an edge effect and drainage cannot be sufficiently enhanced. Moreover, the reason why the depth of the groove is set to not more than 4 mm is because, if the depth of the groove exceeds 4 mm, the circumferential rigidity of the divided rib cannot be maintained more sufficiently. Furthermore, the reason why the width of the groove is set to not more than 5 mm is because, blocks if the width of the groove exceeds 5 mm, binding force between the blocks adjacent to each other is lowered and thus the circumferential rigidity of the block cannot be maintained more sufficiently.

In addition to the above configuration, a depth of a rib edge side portion in the sipe may be set smaller than a depth of a rib center portion.

According to the above configuration, since the depth of the rib edge side portion in the sipe is set smaller than the depth of the rib center portion, circumferential rigidity of the rib edge side portion in the block is sufficiently secured so that the circumferential rigidity of the block can be maintained more sufficiently.

Furthermore, in addition to the above configuration, the depth of the rib edge side portion in the sipe may be set larger within a range of 3 mm to 8 mm than the depth of the groove.

Here, the reason why a difference in depth between the rib edge side portion in the sipe and the runner groove is set to not less than 3 mm is because the edge effect and drainage cannot be sufficiently secured in the middle stage of wear and thereafter, unless the difference in depth between the rib edge side portion in the sipe and the groove reaches 3 mm. Moreover, the reason why the difference in depth between the rib edge side portion in the sipe and the groove is set to not more than 8 mm is because, if the difference in depth between the rib edge side portion in the sipe and the groove exceeds 8 mm, circumferential rigidity of the rib edge side portion in the block cannot be sufficiently secured and thus the circumferential rigidity of the block cannot be maintained more sufficiently.

According to the above configuration, the circumferential rigidity of the block is sufficiently maintained so that the uneven wear such as H&T wear can be made less likely to occur, while sufficiently enhancing the edge effect and the drainage. Thus, in the pneumatic tire, it is possible to improve uneven wear resistance while improving wet performance. In other words, a good balance between the wet performance and the uneven wear resistance can be easily achieved.

### Brief Description of Drawings

[Fig. 1] Fig. 1 is a planar development view of a part of a tread in a pneumatic tire according to a conventional embodiment.
[Fig. 2] Fig. 2 is a view along the line II-II in Fig. 1.
[Fig. 3] Fig. 3 is a planar development view of a part of a tread in a pneumatic tire according to an embodiment of the present invention.
[Fig. 4] Fig. 4 is a view along the line VI-VI in Fig. 3.
[Fig. 5] Fig. 5 is a view along the line V-V in Fig. 3.
[Fig. 6] Fig. 6 is a view showing another form of sipes and grooves according to the embodiment of the present invention.

### Best Mode for Carrying Out the Invention

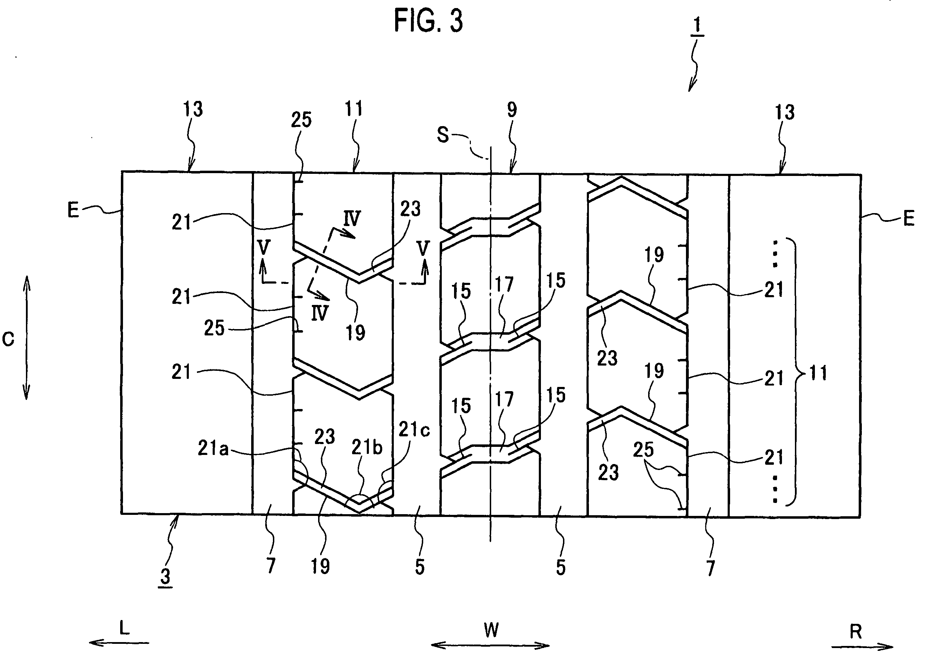

With reference to Figs. 3 to 6, an embodiment of the present invention will be described.

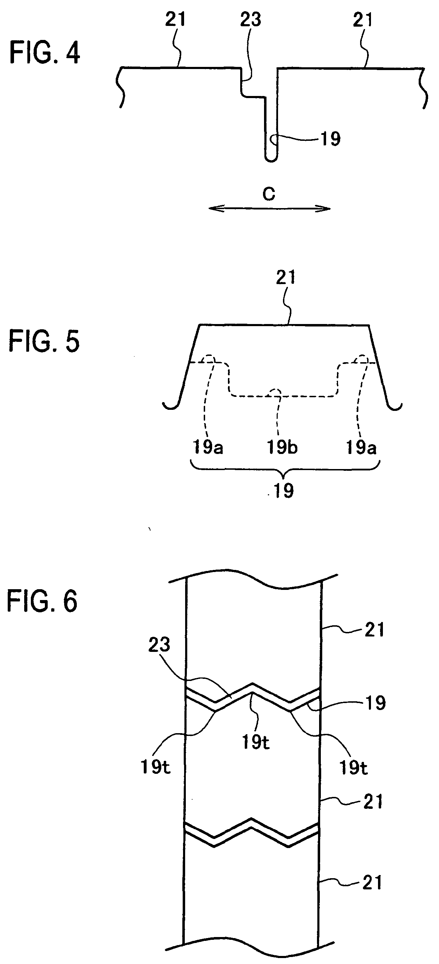

Here, Fig. 3 is a planar development view of a part of a tread in a pneumatic tire according to an embodiment of the present invention. Fig. 4 is a view along the line VI-VI in Fig. 3. Fig. 5 is a view along the line V-V in Fig. 3. Fig. 6 is a view showing another form of sipes and grooves according to the embodiment of the present invention. Note that, in the figure, "L" indicates a left direction and "R" indicates a right direction.

As shown in Fig. 3, in a center portion of a tread 3 in a pneumatic tire 1 according to the embodiment of the present invention, a pair of center circumferential main grooves 5 continuously extending in a tire circumferential direction C are provided so as to sandwich a tire equator line S therebetween. Moreover, in shoulder portions of the tread 3, a pair of shoulder circumferential main grooves 7 continuously extending in the tire circumferential direction C are provided so as to sandwich the pair of center circumferential main grooves 5 therebetween.

A center rib 9 extending in the tire circumferential direction C is defined by the pair of center circumferential main grooves 5. Moreover, second ribs 11 extending in the tire circumferential direction C are defined by the center circumferential main grooves 5 and the shoulder circumferential main grooves 7 adjacent to each other. Furthermore, shoulder ribs 13 extending in the tire circumferential direction C are defined by the shoulder circumferential main grooves 7 and tread edges E.

At left and right rib edges of the center rib 9, a plurality of short sipes 15 are formed so as to be spaced apart in the tire circumferential direction C. Moreover, in the center rib 9, a plurality of grooves 17 communicated with the left and right short sipes 15 corresponding thereto are formed so as to be spaced apart and to cut across the center rib. Furthermore, as shown in Fig. 5, a depth of a rib edge side portion 19a in a sipe 19 is smaller than a depth of a rib center portion 19b.

As shown in Fig. 3, in the pair of second ribs 11, a plurality of the sipes 19 are formed in a traversing manner so as to be spaced apart in the tire circumferential direction C. By the plurality of sipes 19, the pair of second ribs 11 are divided into a plurality of blocks 21. Moreover, each of the sipes 19 has an odd number of (1 in Fig. 3) bent portions 19t in the middle of crossing the second rib 11 so as to set obtuse angles in all intersection angles between the circumferential rib edge and the grooves 21a to 21c on one side in the tire circumferential direction C in each of the blocks 21. Note that the number of the bent portions 19t may be 3 as shown in Fig. 6 as long as the number thereof is an odd number.

Moreover, as shown in Figs. 3 and 6, only on one side in the tire circumferential direction C in each of the blocks 21, a groove 23 communicated with the corresponding sipe 19 is formed so as to cut across the second rib 11.

As shown in Fig. 3, at a rib edge on the tread edge E side of each of the pair of second ribs 11, a plurality of multi-sipes 25 are formed so as to be spaced apart. Here, the multi-sipes mean sipes formed at sipe intervals of 2 mm to 20 mm so as to have a length of 1 mm to 5 mm.

More specific configurations of the sipe 19, the block 21, the groove 23 and the like will be described.

Among all the intersection angles 21a to 21c having obtuse angles in the block 21, each of the intersection angles 21a and 21c with respect to the rib edges is set to have an angle of 110° to 125°.

Here, the reason why the angles of the intersection angles 21a and 21c with respect to the rib edges are set to not less than 110° is because, if the angles of the intersection angles 21a and 21 c with respect to the rib edges are less than 110°, edge components in the tire circumferential direction C cannot be sufficiently secured. Moreover, the reason why the angles of the intersection angles 21a and 21c with respect to the rib edges are set to not more than 125° is because, if the angles
of the intersection angle portions 21a and 21c with respect to the rib edges exceed 125°, reduction in circumferential rigidity on the other side in the tire circumferential direction C in the block 21 cannot be sufficiently suppressed.

The runner groove 23 is set to have a depth of 2 mm to 4 mm and a width of 2 mm to 5 mm.

Here, the reason why the depth and width of the groove 23 are set to not less than 2 mm is because, if the depth and width of the groove 23 are less than 2 mm, an edge effect and drainage cannot be sufficiently enhanced. Moreover, the reason why the depth of the groove 23 is set to not more than 4 mm is because, if the depth of the groove 23 exceeds 4 mm, the circumferential rigidity of the block 21 cannot be maintained more sufficiently. Furthermore, the reason why the width of the groove 23 is set to not more than 5 mm is because, if the width of the groove 23 exceeds 5 mm, binding force between the blocks 21 adjacent to each other is lowered and thus the circumferential rigidity of the block 21 cannot be maintained more sufficiently.

The depth of the rib edge aide portion 19a in the sipe 19 is set larger within a range of 3 mm to 8 mm than the depth of the groove 23.

Here, the reason why a difference in depth between the rib edge side portion 19a in the sipe 19 and the groove 23 is set to not less than 3 mm is because the edge effect and drainage cannot be sufficiently secured in the middle stage of wear and thereafter, unless the difference in depth between the rib edge side portion 19a in the sipe 19 and the groove 23 reaches 3 mm. Moreover, the reason why the difference in depth between the rib edge side portion 19a in the sipe 19 and the groove 23 is set to not more than 8 mm is because, if the difference in depth between the rib edge side portion 19a in the sipe 19 and the groove 23 exceeds 8 mm, circumferential rigidity of the rib edge side portion in the block 21 cannot be sufficiently secured and thus the circumferential rigidity of the black 21 cannot be maintained more sufficiently.

Next, operations and effects according to the embodiment of the present invention will be described.

In the pair of second ribs 11, the plurality of sipes 19 are formed so as to cut across the second ribs. Moreover, in each of the blocks 21, the grooves 23 communicated with the sipes 19 are formed so as to cut across the second ribs 11. Thus, the edge effect (an effect of cutting water films) and the drainage can be enhanced.

All the intersection angles between the circumferential rib edges and the grooves (23) 21a to 21c on one side in the tire circumferential direction C in each of the blocks 21 are set to have the obtuse angles. Therefore, even if the groove 23 is formed on one side in the tire circumferential direction C in each of the blocks 21, circumferential rigidity on one side in the tire circumferential direction C in each of the blocks 21 (rigidity in the tire circumferential direction C) can be sufficiently maintained. Moreover, the groove 23 is formed only on one side in the tire circumferential direction C in each of the blocks 21. In other words, the groove 23 is not formed on the other side in the tire circumferential direction C in each of the blocks 21. Thus, reduction in the circumferential rigidity on the other side in the tire circumferential direction C in each of the blocks 21 can be suppressed. Accordingly, the circumferential rigidity of the block 21 is sufficiently maintained so that uneven wear such as H&T wear can be made less likely to occur.

Particularly, the depth of the rib edge side portion 19a in the sipe 19 is set smaller than the depth of the rib center portion 19b. Moreover, the groove 23 is set to have the depth of 2 mm to 4 mm and the width of 2 mm to 5 mm. Thus, the circumferential rigidity of the block 21 can be more sufficiently maintained while sufficiently enhancing the edge effect and drainage. Moreover, the depth of the rib edge side portion 19a in the sipe 19 is set larger within the range of 3 mm to 8 mm than the depth of the groove 23. Thus, the edge effect and drainage can be sufficiently secured in the middle stage of wear and thereafter.

The angles of the intersection angle portions 21a and 21c with respect to the rib edges are set to 110° to 125°. Thus, reduction in the circumferential rigidity on the other side in the tire circumferential direction C in the block 21 is sufficiently maintained so that the edge components in the tire circumferential direction C can be sufficiently secured..

As described above, according to the embodiment of the present invention, the circumferential rigidity of the divided rib is sufficiently maintained so that the uneven wear such as H&T wear can be made less likely to occur, while sufficiently enhancing the edge effect and the drainage. Thus, in the pneumatic tire, it is possible to easily improve uneven wear resistance while improving wet performance. In other words, a good balance between the wet performance and the uneven wear resistance can be easily achieved. Particularly, since the edge component in the tire circumferential direction C is sufficiently secured, the wet performance at the time of turning.

Note that the present invention is not limited to the above description of the embodiment but can be implemented in various other modes. Moreover, a range of rights encompassed by the present invention is not limited to the above embodiment.

### (Examples)

Examples of the present invention will be described.

### (1) Test Method

As Examples 1 to 6, products of the pneumatic tire 1 according to the embodiment shown in Fig. 3 are used, and each product is set to have a pattern configuration as shown in Table 1 for each specification. Moreover, as Comparative Example 1, a product of the pneumatic tire 101 according to the embodiment shown in Fig. 1 is used and similarly set to have a pattern configuration as shown in Table 1.

Thereafter, for each of Examples 1 to 6 and Comparative Example 1, (a) an uneven wear (H&T step) measuring test and (b) a feeling evaluation test having combined turning and braking tests on a wet road surface are conducted. Note that test conditions are as follows.

### (a) Uneven wear (H&T Step) Measuring Test

- Size of tire used: 315/80R22.5
- Size of rim used: 9.00x22.5
- Set inner pressure of tire: 825 kPa
- Vehicle type: 4x2 tractor, pulling three-axle trailer
- Mounting position: Front wheel
- Test load: 3550 kgf
- Test speed: 80 km/h

An H&T step amount is measured after running on a 3.8-km-circumference test course for 1 month, 7 hours a day, under the above conditions.

### (b) Feeling evaluation on wet road surface

- Size of tire used: 315/80R22.5
- Size of rim used: 9.00x22.5
- Set inner pressure of tire: 825 kPa
- Vehicle type: 4x2 tractor, pulling three-axle trailer
- Mounting position: Front wheel
- Test load: 3550 kgf

Evaluation is made on feelings when: turning is performed on a wet road surface with a water depth of 2 mm at a fixed speed of 30 km/h; and full braking is performed on a wet road surface with a water depth of 2 mm from an initial speed of 30 km/h.

### (2) Test Results

(a) A step amount (heel-and-toe step amount) between a kicking side (heel side) and a stepping side (toe side) of the block in the second rib is evaluated with an average of the entire circumference. Table 1 below shows H&T step absolute amounts of Examples 1 to 6 and Comparative Example 1. Note that, if the H&T step is not more than 2.1 mm, it is determined that there is no problem with marketability.

### (b) Feeling Evaluation on Wet Road Surface

In Table 1 below, evaluations on Examples 2 to 6 and Comparative Example 1 are indicated by indices while setting a feeling evaluation index of Example 1 to 100. Note that Table 1 shows that the larger the feeling evaluation index is, the more stable the behavior in turning on the wet road surface is and the more safely the tire can be stopped.

**Table 1**

| | Example 1 | Example 2 | Example 3 | Example 4 | Example 5 | Example 6 | Comparative Example |
|---|---|---|---|---|---|---|---|
| Anglo (° ) of Intersection angle portion with rib edge | 115 | 117 | 120 | 125 | 128 | 108 | 128 |
| Width (mm) of groove | 2.5 | 2.5 | 2.5 | 3 | 2.5 | 2.5 | 2.5 |
| Depth (mm) of groove | 2.5 | 2.5 | 2.5 | 2.5 | 2.5 | 2.5 | 2.5 |
| Depth (mm) of rib center portion in sipe | 8 | 9 | 9 | 10 | 8 | 8 | 9 |
| Depth (mm) of rib edge aide portion in sipe | 4 | 4 | 5 | 6 | 4 | 4 | 9 |
| H&T Step (mm) | 0.6 | 0.8 | 1.1 | 1.5 | 1.8 | 0.5 | 2.1 |
| Wat Performance Feeling Index | 100 | 101 | 101 | 102 | 102 | 98 | 102 |

Table 1 shows that, in each of the pneumatic tires of Examples 1 to 6, H&T step is suppressed compared with the pneumatic tire of Comparative Example 1.

Moreover, Table 1 also shows that the pneumatic tires of Examples 1 to 6 can be safely turned and stopped on the wet road surface as in the case of the pneumatic tire of Comparative Example 1. Note that an assessment is made that the tire can be safely stopped if the index is 95 or higher.

From the above two tests, it is found out that, in the pneumatic tires of Examples 1 to 6, the H&T step amount is significantly suppressed while keeping approximately the same wet performance, compared with the pneumatic tire of Comparative Example 1.

### Industrial Applicability

In the pneumatic tire according to the present invention, a plurality of sipes are formed in at least the two or more ribs so as to cut across the ribs. Moreover, in each of the blocks, the runner grooves communicated with the sipes are formed so as to cut across the ribs. Thus, the uneven wear can be made less likely to occur by sufficiently maintaining the circumferential rigidity of the block while enhancing the edge effect and the drainage. Consequently, in the pneumatic tire, it is possible to improve uneven wear resistance while improving wet performance.

## Claims

1. A pneumatic tire (1) comprising:
a tread (3) extending in a tire circumferential direction (C), wherein the tread (3) includes
a plurality of ribs (11) defined in a tire width direction by a plurality of circumferential main grooves (5) formed so as to extend continuously in the tire circumferential direction and
a plurality of blocks (21) divided in at least two of the plurality of ribs (11) by a plurality of sipes (19) formed in the at least two of the ribs (11) in a traversing manner so as to be spaced apart in the tire circumferential direction, between each of the blocks (21) a first groove (23) is formed so as to cut across the rib (11), the groove in communication with the corresponding sipe (19) along its length only on one side of the corresponding groove in the tire circumferential direction, wherein
obtuse angles are set in all intersection angles, in a plane parallel to the tire tread, between circumferential rib edges and the first grooves (23) on one side in the tire circumferential direction in each of the blocks (21); and
a center rib (9) in the plurality of ribs is defined by a pair of the circumferential main grooves (5) so as to sandwich a tire equator line (S) therebetween; and **characterised in that**
a plurality of short sipes (15) are formed at left and right rib edges of the center rib (9) so as to be spaced apart in the tire circumferential direction;
a plurality of center rib grooves (17), each in communication with the corresponding short sipes (15) are formed so as to be spaced apart in the tire circumferential direction and to cut across the center rib (9); and
in each sipe (19), a depth of a rib edge side portion (19a) is set smaller than a depth of a rib center portion (19b).

2. The pneumatic tire (1) according to claim 1, wherein the intersection angles (21a, 21 c) with respect to rib edges are set to 110° to 125°.

3. The pneumatic tire (1) according to claim 1, wherein each of the sipes (19) has an odd number of bent portions in the middle of crossing the rib (11).

4. The pneumatic tire (1) according to claim 1, wherein a depth of each first groove (23) is set to 2 mm to 4 mm and a width of each first groove (23) is set to 2 mm to 5 mm.

5. The pneumatic tire (1) according to claim 1, wherein in each sipe (19), a ratio of the depth of the center rib portion (19b) to the depth of the rib edge side portion (19a) is equal to or more than 2.0 and equal to or less than 2.25.

6. The pneumatic tire (1) according to claim 1, wherein the depth of the rib edge side portion (19a) in each sipe (19) is set larger within a range of 3 mm to 8 mm than the depth of each first groove (23).

## Patentansprüche

1. Luftreifen (1), umfassend:
eine Lauffläche (3), welche sich in einer Reifenumfangsrichtung (C) erstreckt, wobei die Lauffläche (3) umfasst
eine Mehrzahl von Rippen (11), welche in einer Reifenbreitenrichtung durch eine Mehrzahl von Umfangshauptrillen (5) definiert sind, welche so gebildet sind, dass sie sich kontinuierlich in der Reifenumfangsrichtung erstrecken, und
eine Mehrzahl von Blöcken (21) welche in zumindest zwei der Mehrzahl von Rippen (11) durch eine Mehrzahl von Einschnitten (19) unterteilt sind, welche in zumindest zwei der Rippen (11) in einer Querrichtung gebildet sind, so dass sie in der Reifenumfangsrichtung voneinander beabstandet sind, zwischen jedem der Blöcke (21) eine erste Rille (23) so geformt ist, dass sie die Rippe (11) durchschneidet, wobei die Rille mit dem entsprechenden Einschnitt (19) entlang seiner Länge nur auf einer Seite der entsprechenden Rille in der Reifenumfangsrichtung kommuniziert, wobei
stumpfe Winkel in allen Schnittwinkeln, in einer der Reifenlauffläche parallelen Ebene, zwischen Umfangsrippenrändern und den ersten Rillen (23) auf einer Seite in der Reifenumfangsrichtung in jedem der Blöcke (21) ausgebildet sind; und
eine mittlere Rippe (9) unter der Mehrzahl von Rippen, durch ein Paar von Umfangshauptrillen (5) definiert ist, so dass eine Reifenäquatorlinie (S) dazwischen angeordnet ist; und **dadurch gekennzeichnet, dass**
eine Mehrzahl von kurzen Einschnitten (15) auf linken und rechten Rippenrändern der mittleren Rippe (9) gebildet sind, um in der Reifenumfangsrichtung voneinander beabstandet zu sein;
eine Mehrzahl von mittleren Rippenrillen (17), welche jeweils mit den entsprechenden kurzen Einschnitten (15) kommunizieren, so ausgebildet sind, dass sie in der Reifenumfangsrichtung voneinander beabstandet sind, und dass sie die mittlere Rippe (9) durchschneiden; und
in jedem Einschnitt (19), eine Tiefe eines Rippenrandseitenbereich (19a) kleiner als eine Tiefe eines Rippenmittelbereiches (19b) eingestellt ist.

2. Luftreifen (1) nach Anspruch 1, wobei die Schnittwinkel (21a, 21c) relativ zu den Rippenrändern gleich 110° bis 125° betragen.

3. Luftreifen (1) nach Anspruch 1, wobei jeder der Einschnitte (19) eine ungerade Anzahl von gebogenen Bereichen in der Mitte des Rippendurchgangs (11) aufweist.

4. Luftreifen (1) nach Anspruch 1, wobei eine Tiefe jeder ersten Rille (23) zwischen 2 mm und 4 mm und eine Breite jeder ersten Rille (23) zwischen 2 mm und 5 mm beträgt.

5. Luftreifen (1) nach Anspruch 1, wobei in jedem Einschnitt (19), ein Verhältnis zwischen der Tiefe des mittleren Rippenbereichs (19b) und der Tiefe des Rippenrandseitenbereichs (19a) gleich oder größer als 2,0 und kleiner oder gleich 2,25 ist.

6. Luftreifen (1) nach Anspruch 1, wobei die Tiefe des Rippenrandseitenbereichs (19a) in jedem Einschnitt (19) größer als die Tiefe jeder ersten Rille (23) innerhalb eines Bereichs von 3 mm bis 8 mm eingestellt wird.

## Revendications

1. Bandage pneumatique (1), comprenant :
une bande de roulement (3) s'étendant dans une direction circonférentielle du bandage pneumatique (C), la bande de roulement (3) englobant :
plusieurs nervures (11) définies dans une direction de la largeur du bandage pneumatique par plusieurs rainures principales circonférentielles (5) formées de sorte à s'étendre en continu dans la direction circonférentielle du bandage pneumatique ; et
plusieurs pavés (21) divisés en au moins deux des plusieurs nervures (11) par plusieurs lamelles (19) formées dans les au moins deux des nervures (11), d'une manière traversante, de sorte à être espacées dans la direction circonférentielle du bandage pneumatique, une première rainure (23) étant formée entre chacun des pavés (21) de sorte à couper à travers la nervure (11), la rainure étant en communication avec la lamelle correspondante (19) le long de sa longueur, uniquement sur un côté de la rainure correspondante dans la direction circonférentielle du bandage pneumatique ; dans lequel :
des angles obtus sont formés dans tous les angles d'intersection, dans un plan parallèle à la bande de roulement, entre les bords des nervures circonférentielles et les premières rainures (23) sur un côté dans la direction circonférentielle du bandage pneumatique, dans chacun des pavés (21) ; et
une nervure centrale (9) dans les plusieurs nervures est définie par une paire des rainures principales circonférentielles (5), de sorte à prendre en sandwich une ligne équatoriale du bandage pneumatique (S) entre elles ; et **caractérisé en ce que** :
plusieurs lamelles courtes (15) sont formées au niveau des bords de rainures de gauche et de droite de la nervure centrale (9), de sorte à être espacées dans la direction circonférentielle du bandage pneumatique ;
plusieurs rainures à nervures centrales (17), communiquant chacune avec des lamelles courtes (15) correspondantes sont formées de sorte à être espacées dans la direction circonférentielle du bandage pneumatique et à couper à travers la nervure centrale (9) ; et
dans chaque lamelle (19), une profondeur d'une partie latérale du bord de nervure (19a) est ajustée de sorte à être inférieure à une profondeur d'une partie centrale de la nervure (19b).

2. Bandage pneumatique (1) selon la revendication 1, dans lequel les angles d'intersection (21a, 21c) par rapport aux bords des nervures sont compris entre 110° et 125°.

3. Bandage pneumatique (1) selon la revendication 1, dans lequel chacune des lamelles (19) comporte un nombre impair de parties fléchies au centre de la traversée de la nervure (11).

4. Bandage pneumatique (1) selon la revendication 1, dans lequel une profondeur de chaque première rainure (23) est comprise entre 2 mm et 4 mm, une largeur de chaque première rainure (23) étant comprise entre 2 mm et 5 mm.

5. Bandage pneumatique (1) selon la revendication 1, dans lequel, dans chaque lamelle (19), un rapport entre la profondeur de la partie centrale de la nervure (19b) et la profondeur de la partie latérale du bord de la rainure (19a) est égal ou supérieur à 2,0 et égal ou inférieur à 2,25.

6. Bandage pneumatique (1) selon la revendication 1, dans lequel la profondeur de la partie latérale du bord de rainure (19a) dans chaque lamelle (19) est ajustée de sorte à être supérieure, dans un intervalle allant de 3 mm à 8 mm, à la profondeur de chaque première rainure (23).
